## Europäisches Patentamt
## European Patent Office
## Office européen des brevets

(11) Veröffentlichungsnummer: **0 123 119**
**B1**

(12) **EUROPÄISCHE PATENTSCHRIFT**

(45) Veröffentlichungstag der Patentschrift:
**28.12.88**.

(21) Anmeldenummer: **84102953.1**

(22) Anmeldetag: **16.03.84**

(51) Int. Cl.⁴: **C 03 B 35/18**

(54) Vorrichtung zum Wölben und Fördern eines Flächengebildes.

(30) Priorität: **22.03.83 DE 3310357**

(43) Veröffentlichungstag der Anmeldung:
**31.10.84 Patentblatt 84/44**

(45) Bekanntmachung des Hinweises auf die Patenterteilung:
**28.12.88 Patentblatt 88/52**

(84) Benannte Vertragsstaaten:
**AT BE CH DE FR GB IT LI LU NL SE**

(56) Entgegenhaltungen:
**FR-A- 2 221 409**
**US-A- 3 545 951**
**US-A- 4 226 608**

(73) Patentinhaber: **Glasstech, Inc., 995 Fourth Street Ampoint Industrial Park, Perrysburg Ohio 43551 (US)**

(72) Erfinder: **Dicks, Karl-Heinz, Lammersdorf, D-5107 Simmerath (DE)**
Erfinder: **Kramer, Carl, Am Chorusberg 8, D-5100 Aachen (DE)**

(74) Vertreter: **Dipl.-Ing. Schwabe, Dr. Dr. Sandmair, Dr. Marx, Stuntzstrasse 16, D-8000 München 80 (DE)**

**Beschreibung**

Die Erfindung betrifft eine Vorrichtung zum Wölben und Fördern eines Flächengebildes, insbesondere einer auf ihre Erweichungstemperatur erwärmten Glasscheibe.

Solche Vorrichtungen werden insbesondere bei Biegeeinrichtungen der Glasveredelung eingesetzt (DE-C-1 679 961, DE-A-2 331 584), wobei starre, in Kreisbogenform gewölbte Stäbe verwendet werden; eine Veränderung des Wölberadius wird durch eine Schwenkbewegung dieser Stäbe um eine senkrecht zur Transportrichtung verlaufende Achse erreicht.

Diese Schwenkbewegung hat jedoch den Nachteil, dass die über der Scheibenbreite unterschiedlichen Schwenkradien zu unterschiedlichen Geschwindigkeiten zwischen Scheibe und Transporteinrichtung sowie Stäbe führen. Ausserdem ergibt sich bei zur Transportrichtung unsymmetrischer Scheibe eine auf beiden Seiten unterschiedliche, senkrecht zur Transportrichtung gerichtete Tangentialkraft, die zu einer Verlagerung der Scheibe auf den Stäben führt und die genaue Einhaltung einer definierten Biegeachse zumindest erschwert, in vielen Fällen vollständig ausschliesst. Ein weiterer Nachteil einer solchen Vorrichtung liegt darin, dass beim Verstellen der Wölbeform in einem grösseren Radiusbereich, bedingt durch den dazu erforderlichen, grossen Schwenkwinkel, ein relativ grosses Einbaumass der schwenkbaren Stäbe, in Transportrichtung gesehen, erforderlich ist.

Aus der US-A-4 226 608 geht eine Vorrichtung zum Wölben und Fördern einer auf ihre Erweichungstemperatur erwärmten Glasscheibe hervor, die in horizontaler Richtung auf einem gewölbten Bett vorwärtsbewegt wird, das durch eine Folge von flexiblen Formrollen mit wendelförmigen Federn mit fortschreitend zunehmenden Krümmungsgraden gebildet wird, so dass sich die Glasscheibe unter ihrem eigenen Gewicht verformt und allmählich die Krümmung der Formrollen annimmt. Die Formrollen sind mit Endabschnitten versehen, deren Winkellage einstellbar ist, so dass der Krümmungsgrad der Rollen unabhängig voneinander verändert werden kann. Dem Formbett folgt ein zweites Bett, das durch flexible Rollen mit einer konstanten Krümmung gebildet wird, auf denen die geformte Glasscheibe gelagert und dabei getempert oder gekühlt wird.

Ein weiteres Problem tritt dann auf, wenn solche gewölbten Stäbe zur Führung der bereits verformten Scheiben in einer Vorspanneinrichtung verwendet werden, die mit Luftdüsen betrieben wird; denn dann müssen entweder die Düsenrippen in der gleichen, komplizierten Weise verformt werden, was die konstruktiven Möglichkeiten der Luftversorgung dieser Düsenrippen sehr stark einschränkt, oder die Stäbe müssen mit einer entsprechend grösseren Teilung angeordnet werden, so dass die sichere Führung von Scheiben mit normalem Format nicht mehr gewährleistet ist.

Der Erfindung liegt deshalb die Aufgabe zugrunde, eine Vorrichtung zum Wölben und Fördern eines Flächengebildes, insbesondere einer auf ihre Erweichungstemperatur erwärmten Glasscheibe, zu schaffen, die eine exakte, genau definierte Änderung der Wölbeform ermöglicht.

Dies wird erfindungsgemäss durch die folgenden Merkmale erreicht:

- es sind mehrere gewölbte Form- oder Transport-Stäbe aus einem Kern und aus einer den Kern umgebenden, in der Transportrichtung des Flächengebildes angetriebenen Umhüllung vorgesehen;
- die im Querschnitt formstabilen, jedoch in Längsrichtung elastisch verformbaren Kerne der Stäbe werden durch Einleiten von Biegemomenten in ihre seitlichen Enden in der Transportrichtung des Flächengebildes immer stärker gewölbt, wobei die letzten Stäbe an ihren Oberflächen eine der Form des gewölbten Flächengebildes entsprechende Wölbung zeigen; und
- eine schwenkbare Lagerung leitet die Biegemomente in die Kerne der Stäbe ein.

Zweckmässige Ausführungsformen sind in den Unteransprüchen zusammengestellt.

Die mit der Erfindung erzielten Vorteile beruhen darauf, dass die Stäbe einen formstabilen Kern aufweisen, in dessen seitliche Enden Biegemomente eingeleitet werden können, wodurch die Stäbe auf genau definierte Weise elastisch verformt werden und dadurch eine Wölbung erhalten, die in weiten Bereichen an die angestrebte Wölbung des Flächengebildes, beispielsweise einer Glasscheibe, angepasst werden kann. Bei jeder Änderung der Wölbeform erfolgt die Verstellung in Ebenen, die exakt senkrecht zur Transportrichtung liegen, so dass diese Stäbe zu ihrem Einbau nur wenig Raum benötigen, nämlich nur einen Raum, der etwas grösser als ihr Durchmesser ist. Damit können also solche Stäbe ohne Probleme in hocheffektiven Blaseinrichtungen zwischen Düsenrippen mit kleiner Teilung eingebaut werden.

Es ist zwar aus der US-A-3 485 615 bereits bekannt, in horizontalen Transporteinrichtungen vertikal verstellbare Transportstäbe vorzusehen. Dabei sind die Stäbe als umlaufende Schläuche ausgeführt, in deren Innern sich Schraubenfedern befinden. Die Schraubenfedern sind auf Lagerelementen gelagert, die auf einer als Stahlseil ausgeführten Seele aufgereiht sind. Diese Vorrichtung kann sich jedoch nur passiv verformen. Dazu ist ein von oben auf die Vorrichtung aufgedrücktes, der Wölbeform entsprechendes Kissen erforderlich. Nach Abtransport der verformten Scheibe aus dem Verformungsbereich und Anheben des Wölbekissens können durch Spannen der Seele die Stäbe wieder in die gerade Ausgangslage zurück verformt werden.

Die Erfindung wird im folgenden anhand eines Ausführungsbeispiels unter Bezugnahme auf die beiliegenden, schematischen Zeichnungen näher erörtert. Es zeigen:

Fig. 1 eine Schnittansicht, in Transportrichtung gesehen, durch eine Vorrichtung zum Wölben einer auf ihrer Erweichungstemperatur erwärmten Glasscheibe,

Fig. 2 einen Schnitt durch eine erste Ausführungsform eines Stabes, und

Fig. 3 einen Schnitt durch zwei weitere Ausführungsformen eines Stabes.

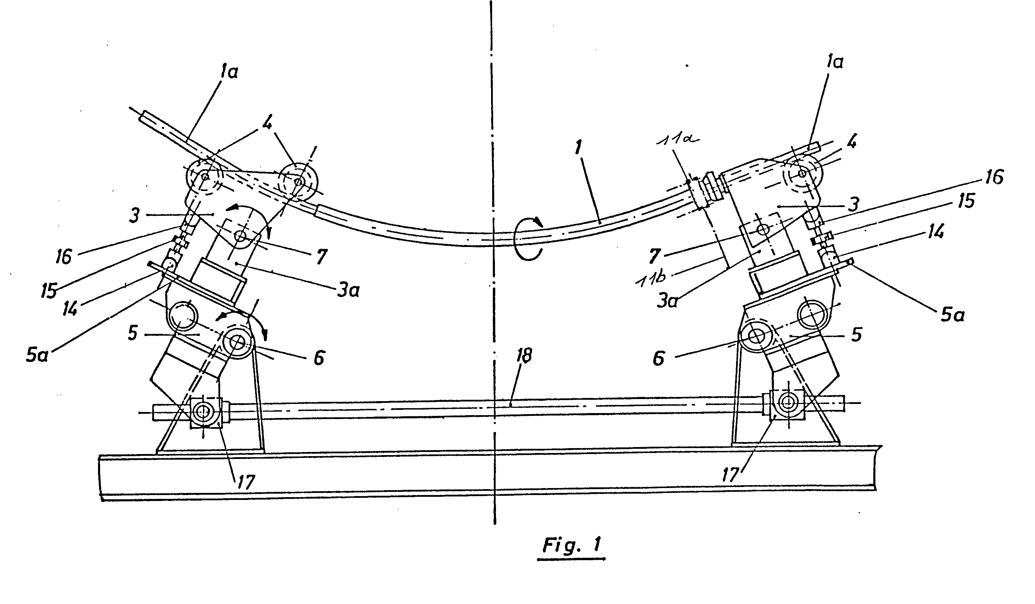

Bei der in Fig. 1 dargestellten Vorrichtung zum Wölben und Fördern von Flächengebilden werden die zu wölbenden, auf die Erweichungstemperatur erwärmten Glasscheiben senkrecht zur Zeichenebene transportiert und liegen dabei auf einer Reihe von gewölbten Form- und Transportstäben auf, von denen in Fig. 1 nur ein einziger Stab 1 dargestellt ist.

Wie noch erläutert werden soll, weist jeder Stab 1 einen formstabilen Kern und eine drehbar auf dem Kern gelagerte, äussere Hülle auf, so dass die Oberfläche jedes Stabes eine Drehbewegung um seine Längsachse durchführen kann, wie in Fig. 1 durch den Pfeil angedeutet ist.

Das gemäss der Darstellung in Fig. 1 linke seitliche Ende 1a des Stabes 1 ist beweglich zwischen zwei Rollen 4 geführt, die mit Nuten für die Aufnahme des Endes 1a versehen sind. Diese beiden Rollen 4 dienen zum Längenausgleich in axialer Richtung der Stäbe bei einer Änderung ihrer Wölbeform, die durch eine Schwenkbewegung des schwenkbaren Lagerbocks 3 der beiden Rollen 4 um den Punkt 7 erreicht ist.

An dem gemäss der Darstellung in Fig. 1 rechten seitlichen Ende 1a des Stabes 1 ist ein entsprechender, um den Punkt 7 schwenkbarer Lagerbock 3 vorgesehen, der jedoch nur eine einzige Rolle 4 mit einer Nut für die Aufnahme des Endes 1a des Stabes 1 aufweist.

Die Rollen 4 und die Lagerböcke 3 haben also etwa die Funktion, wie sie für Rohrbiegemaschinen bekannt ist.

Die Lagerböcke 3 für eine Gruppe von Stäben 1 sind auf gemeinsamen Tragprofilen 5 montiert, die gruppenweise durch Drehen um ihre Lagerpunkte 6 sehr exakt gemeinsam verstellt werden können. Da die eigentlichen Lagerböcke 3 getrennt hiervon um die Achsen 7 schwenkbar sind, ist entweder eine Feinjustierung der Wölbeform der einzelnen Stäbe 1 oder die unterschiedliche Einstellung der Wölbeform verschiedener Stäbe 1 möglich, so dass auch dreidimensionale Wölbeformen erhalten werden können.

Die Wölbeform der Stäbe 1 und damit der zu verformenden Glasscheibe hängt einerseits von der Grösse der an den beiden Lagern eingeleiteten Biegemomente und andererseits von der Steifigkeit und der Steifigkeitsverteilung der Stäbe 1 ab.

Will man eine kreisbogenförmige Wölbung erreichen, so sollte ein Stab mit exakt gleicher, über seine Länge verteilter Steifigkeit verwendet werden; ausserdem sollten die Biegemomente an den Enden 1a der Stäbe exakt gleich sein.

Durch Variation dieser Grössen lassen sich ausserdem Wölbeformen realisieren, die von der Kreisbogenform abweichen.

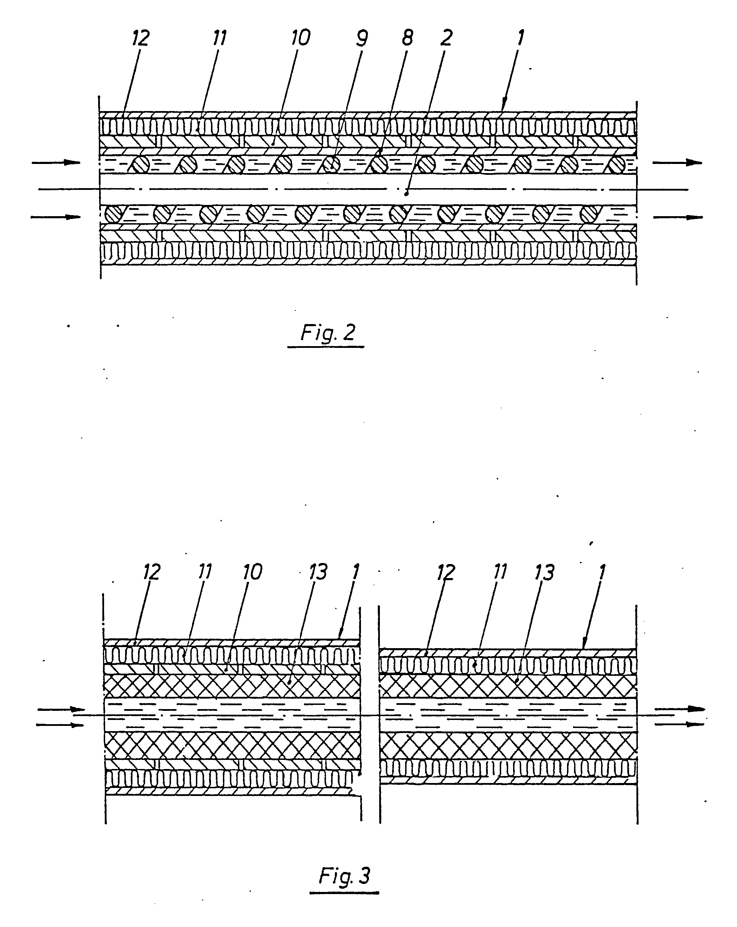

Fig. 2 zeigt einen Längsschnitt durch eine Ausführungsform eines Stabes 1; der formstabile, jedoch elastisch verformbare Kern 2 dieses Stabes 1 weist einen Rundstab 2, insbesondere aus einem Federstahl, auf; dieser Rundstab 2 wird durch ein flexibles Rohr 8 aus einem flexiblen Kunststoff, insbesondere aus Polytetrafluorethylen oder Polyamid, umgeben; zur exakt zentrischen Führung des Rundstabes 2 weist das Rohr 8 einen wendelförmigen Einsatz 9 auf, der gleichzeitig zur verbesserten Führung des den Rundstab umgebenden Kühlwassers dient, dessen Strömungsrichtung in Fig. 2 durch die Pfeile angedeutet ist.

Auf dem Kunststoffrohr 8 sind Lagerringe 10 aufgebracht, die aus einem schlecht wärmeleitenden, temperaturbeständigen und abriebfesten Material bestehen. Gute Ergebnisse werden mit Lagerringen auf Asbest-Basis erzielt.

Auf diesen Lagerringen 10 wird eine flexible Aussenhülle 11 geführt, die zweckmässigerweise durch einen Wellschlauch 11 gebildet wird; dieser Wellschlauch 11 ist durch einen weiteren Schlauch 12 aus einem Geflecht aus Glas- oder Quarzfäden umspannt.

Der wesentliche Vorteil dieser Ausführungsform des Stabes 1 liegt darin, dass der Durchmesser des elastischen Trägers, nämlich des massiven Rundstabes 2, klein gehalten werden kann; dadurch wird der Faserabstand gering, so dass bei gleichem Elastizitätsmodul dieses Trägers 2 der Stab 1 in einem viel grösseren Bereich elastisch verformt werden kann als dies bei den anderen, noch zu erläuternden Ausführungsformen möglich ist; trotzdem lässt sich der Träger und damit auch die Lagerringe 10 wirkungsvoll kühlen, da der wendelförmige Einsatz 9 zur Zentrierung dient und eine gleichmässige Kühlung des Rundstabes über seinen Umfang gewährleistet.

Unter Berücksichtigung der Kennwerte für die einzelnen, möglichen Materialien beim Aufbau dieses Stabes 1 sowie des Wärmedurchgangs können mit den Stäben nach Fig. 2 am Schlauch 12 Oberflächentemperaturen von mindestens 550 °C erlaubt werden, während bei den anderen, noch zu erläuternden Ausführungsformen die Oberflächentemperaturen maximal 200 bis 250 °C betragen dürfen. Aufgrund dieser hohen, möglichen Oberflächentemperatur des Stabes nach Fig. 2 kann die eigentliche Biegestrecke zur Vermeidung von Temperaturverlusten der Glasscheibe während des Biegens beheizt werden, so dass die Scheibe beim Durchlaufen der Biegevorrichtung einen geringeren Temperaturverlust erfährt; dies ist unter folgendem Gesichtspunkt wesentlich: An diese Wölbevorrichtung schliesst sich im allgemeinen eine Vorspannstrecke an, wobei zum Vorspannen eine vorgegebene Mindesttemperatur erforderlich ist; diese Mindesttemperatur konnte bisher wegen der Wärmeverluste beim Biegen nur dadurch erreicht werden, dass die Glasscheibe vor dem Biegevorgang im Ofen sehr stark erwärmt wurde. Diese starke Erwärmung der Glasscheiben führt jedoch zu Deformationen beim Transport über die in Abständen angebrachten Stäbe, die sich wiederum in optischen Fehlern bemerkbar machen.

Durch die Beheizung der Biegestrecke ist die extrem starke Aufheizung der Glasscheiben vor dem Wölbevorgang nicht mehr erforderlich, so dass die erwähnten optischen Fehler vermieden werden können.

Durch eine weitere Erhöhung der zulässigen Oberflächentemperatur, wie sie durch geeignete Materialauswahl möglich ist, könnten die Stäbe 1 gegebenenfalls sogar direkt im Ofen angeordnet und dort verbogen werden; die erwähnte Vorspannstrecke würde sich dann direkt an den Ofen anschliessen, so dass während des Biegens kein Temperaturverlust auftreten kann.

Ein weiterer Vorteil dieser Ausführungsform in Bezug auf die Wasserkühlung liegt darin, dass an den Enden des Stabes 1 keine drehenden Teile gegeneinander abgedichtet werden müssen.

Wenn die Betriebstemperaturen nicht sehr hoch sind, kann auf die Zuführung des Kühlmittels, im allgemeinen Wasser, verzichtet werden. Dann wird es möglich, die Lagerringe 10 direkt auf dem Rundstab 2 zu führen, also auf das Kunststoffrohr 8 und die Einsätze 9 zu verzichten.

Eine weitere Variante besteht darin, den Rundstab 2 aus dem Federstahl und die Lagerringe 10 durch ein entsprechendes, einziges Kunststoffteil zu ersetzen. Wenn der geforderte Verstellbereich dies zulässt, können beispielsweise die verformbaren Elemente in einfacher Weise als Rohre aus glasfaserverstärktem Kunststoff ausgeführt werden, wie in Fig. 3 angedeutet ist. Zur Kühlung des Stabes 1 wird dabei das Rohr 13 aus glasfaserverstärktem Kunststoff von Luft oder Wasser durchströmt. Auf dieses Rohr 13 kann dann der Wellschlauch 11 aufgebracht werden. Wird die Aussenschicht des Kunststoffrohrs 13 aus einem entsprechenden abriebfesten Material hergestellt, kann auf die Lagerringe 10 verzichtet werden (siehe Fig. 3 rechter Teil).

Anstelle einer Kombination eines aus Metall bestehenden Wellschlauches 11 mit Lagerringen 10 oder eines Kunststoffrohrs 13 aus abriebfestem Material ist auch die Verwendung eines Wellschlauches 11 mit entsprechenden Lagereigenschaften möglich, wie sie durch den Einsatz von Polytetrafluorethylen erreicht werden.

In Fig. 1 erkennt man, dass die Stäbe 1 an ihren seitlichen Enden 1a keine Umhüllung mehr aufweisen, d.h., die Rollen 4 liegen direkt auf dem Kern, beispielsweise dem Rundstab 2 aus Federstahl auf, so dass eine Verformung der Umhüllung aufgrund des direkten Kontaktes mit den Rollen 4 vermieden wird.

In Fig. 1 ist noch zu erkennen, dass mit der drehbaren Umhüllung des Kerns des Stabes 1, nämlich mit dem Wellschlauch 11, eine Buchse 11a fest verbunden ist, die mittels einer schematisch angedeuteten Kette 11b von einem nicht dargestellten Antriebsmotor gedreht wird. Dadurch wird also der Wellschlauch 11 und damit die Oberfläche des Stabes 1 gedreht, wie es für den Transport der Glasscheiben erforderlich ist.

Weiterhin ist in Fig. 1 eine Ausführungsform eines Schwenkmechanismus für die Lagerböcke 3 bzw. die Tragprofile 5 zu erkennen. Zu diesem Zweck weist jedes Tragprofil 5 eine obere Plattform 5a auf, auf der parallel zu der Stütze 3a für den Lagerbock 3 eine Gewindespindel 15 angeordnet ist. Diese Gewindespindel 15 sitzt in einer oberen, am Lagerbock 3 befestigten Gewindebuchse 16 bzw. einer unteren, an der Plattform 5a befestigten Gewindebuchse 14, so dass bei einer manuellen oder motorischen Drehung der Gewindespindel 15 durch nicht dargestellte Mittel die Gewindebuchse 16 und damit der Lagerbock 3 um den Punkt 7 verschwenkt werden kann.

Wie bereits oben erwähnt wurde, sind die in Transportrichtung hintereinander angeordneten Tragprofile 5 miteinander gekuppelt, so dass sie gemeinsam verstellt werden können. Zu diesem Zweck sind bei der Ausführungsform nach Fig. 1 am unteren Ende von zwei zueinander gehörenden Tragprofilen 5 Gewindebuchsen 17 vorgesehen, durch deren Gewindebohrungen eine Gewindespindel 18 geführt wird. Durch eine Drehung der Gewindespindel 18 im Uhrzeigersinn oder gegen den Uhrzeigersinn werden die Gewindebuchsen 17 aufeinander zu bzw. voneinander weg bewegt, so dass die Tragprofile 5 um die Lagerpunkte 6 geschwenkt werden.

## Patentansprüche

1. Vorrichtung zum Wölben und Fördern eines Flächengebildes, insbesondere einer auf ihre Erweichungstemperatur erwärmten Glasscheibe, mit den folgenden Merkmalen:

a) es sind mehrere gewölbte Form- oder Transport-Stäbe (1) aus einem Kern (2, 8, 9; 13) und aus einer den Kern (2, 8, 9; 13) umgebenden, in der Transportrichtung des Flächengebildes angetriebenen Umhüllung (11) vorgesehen;

b) die im Querschnitt formstabilen, jedoch in Längsrichtung elastisch verformbaren Kerne (2, 8, 9; 13) der Stäbe (1) werden durch Einleiten von Biegemomenten in ihre seitlichen Enden (12) in der Transportrichtung des Flächengebildes immer stärker gewölbt, wobei die letzten Stäbe (1) an ihren Oberflächen eine der Form des gewölbten Flächengebildes entsprechende Wölbung zeigen; und

c) eine schwenkbare Lagerung (3 bis 7) leitet die Biegemomente in die Kerne (2, 8, 9; 13) der Stäbe (1) ein.

2. Vorrichtung nach Anspruch 1, wobei die Lagerung rollenartige Auflager (4) nach Art einer Rohrbiegemaschine (3 bis 7) für die elastische Verformung der Stäbe (1) aufweist.

3. Vorrichtung nach Anspruch 2, wobei die Lagerung zwei an einem schwenkbaren Lagerbock (3) angebrachte Rollen (4) aufweist, die in Längsrichtung der Stäbe (1) im Abstand voneinander angeordnet sind, und wobei die Enden (1a) der Stäbe zwischen den Rollen (4) angeordnet sind.

4. Vorrichtung nach Anspruch 3, wobei die Rollen (4) Nuten für die Aufnahme der Enden (1a) der Stäbe (1) aufweisen.

5. Vorrichtung nach einem der Ansprüche 3 oder 4, wobei jeder Lagerbock (3) auf einem Tragprofil (5) montiert ist, das durch Drehen um seinen Lagerpunkt (6) verstellbar ist.

6. Vorrichtung nach einem der Ansprüche 3 bis 5, wobei die Lagerböcke (3) für mehrere Stäbe (1) auf gemeinsamen Tragprofilen (5) montiert sind, die gruppenweise durch Drehen um ihre Lagerpunkte (6) gemeinsam verstellbar sind.

7. Vorrichtung nach einem der Ansprüche 5 oder 6, wobei an zwei einander zugeordneten Tragprofilen (5) Gewindebuchsen (17) vorgesehen sind, in deren Gewindebohrungen sich eine Gewindespindel (18) für die Schwenkbewegung der Tragprofile (5) befindet.

8. Vorrichtung nach einem der Ansprüche 5 bis 7, wobei zwischen den Tragprofilen (5) und den Lagerböcken (3) in zugehörigen Gewindebuchsen (14, 16) sitzende Gewindespindeln (15) für die Verschwenkung der einzelnen Lagerböcke (3) vorgesehen sind.

9. Vorrichtung nach einem der Ansprüche 1 bis 8, wobei der Kern einen Rundstab (2), insbesondere aus Federstahl, aufweist.

10. Vorrichtung nach Anspruch 9, wobei der Rundstab (2) durch einen wendelförmigen Einsatz (9) umgeben ist, auf dem ein flexibles Kunststoffrohr (8) angeordnet ist.

11. Vorrichtung nach einem der Ansprüche 1 bis 8, wobei der Kern durch einen Hohlstab (13) gebildet ist.

12. Vorrichtung nach Anspruch 11, wobei der Hohlstab (13) aus einem Kunststoff, insbesondere einem glasfaserverstärkten Kunststoff, besteht.

13. Vorrichtung nach einem der Ansprüche 9 bis 12, wobei der Kern (2, 8, 9; 13) durch einen flexiblen Hohlstab (11) umgeben ist.

14. Vorrichtung nach Anspruch 13, wobei der flexible Hohlstab durch einen Wellschlauch (11) gebildet ist.

15. Vorrichtung nach einem der Ansprüche 13 oder 14, wobei zwischen dem flexiblen Hohlstab (11) und dem Kern (2, 8, 9; 13) Lagerringe (10) angeordnet sind.

## Claims

1. Device for bending and transporting a flat-shaped article, in particular a glass sheet heated to its softening temperature; with the following features:

a) a plurality of curved shaping or transporting bars (1) having a core (2, 8, 9; 13) and a covering (11) surrounding the core (2, 8, 9; 13) and driven in the transporting direction of the flat-shaped article;

b) the cores (2, 8, 9; 13) of the bars (1) are inherently stable in cross-section but elastically deformable in longitudinal direction, and are curved increasingly intensely through the introduction of bending moments in their lateral ends (12) in the transporting direction of the flat-shaped article, the last bars (1) having on their surfaces a curve corresponding to the shape of the curved flat-shaped article; and

c) a swivel-mounted bearing (3 to 7) introduces the bending moments into the cores (2, 8, 9; 13) of the bars (1).

2. A device according to Claim 1, in which the bearing has roller-like supports (4) in the manner of a pipe-bending machine (3 to 7) for the elastic deformation of the bars (1).

3. Device according to Claim 2, in which the bearing has two rollers (4) mounted on a swivel-mounted bearing block (3), which rollers are arranged at a distance from each other in longitudinal direction of the bars (1), and in which the ends (1a) of the bars are arranged between the rollers (4).

4. Device according to Claim 3, in which the rollers (4) have grooves to receive the ends (1a) of the bars (1).

5. Device according to one of Claims 3 or 4, in which each bearing block (3) is mounted on a supporting section (5), which is adjustable by turning about its bearing point (6).

6. Device according to one of Claims 3 to 5, in which the bearing blocks (3) for several bars (1) are mounted on common supporting sections (5), which are jointly adjustable in groups by turning about their bearing points (6).

7. Device according to one of Claims 5 or 6, in which threaded bushes (17) are provided on two supporting sections (5) associated with each other, in the threaded bores of which bushes a threaded spindle (18) is situated for the rotating motion of the supporting sections (5).

8. Device according to one of Claims 5 to 7, in which between the supporting sections (5) and the bearing blocks (3) threaded spindles (15), sitting in associated threaded bushes (14, 16), are provided for the swivelling of the individual bearing blocks (3).

9. Device according to one of Claims 1 to 8, in which the core has a round bar (2), in particular of spring steel.

10. Device according to Claim 9, in which the round bar (2) is surrounded by a spiral-shaped insert (9), on which a flexible plastic tube (8) is arranged.

11. Device according to one of Claims 1 to 8, in which the core is formed by a hollow bar (13).

12. Device according to Claim 11, in which the hollow bar (13) consists of a plastics, in particular of a plastics reinforced with glass fibre.

13. Device according to one of Claims 9 to 12, in which the core (2, 8, 9; 13) is surrounded by a flexible hollow bar (11).

14. Device according to Claim 13, in which the flexible hollow bar is formed by a corrugated tube (11).

15. Device according to one of Claims 13 or 14, in which bearing rings (10) are arranged between the flexible hollow bar (11) and the core (2, 8, 9; 13).

## Revendications

1. Dispositif pour bomber et transporter un produit plan, en particulier une feuille de verre chauffée à sa température de ramollissement, présentant les caractéristiques suivantes:

a) il est prévu une pluralité de barres cintrées de formage ou de transport (1) constituée d'un noyau (2, 8, 9; 13) et d'une enveloppe (11) entourant le noyau (2, 8, 9; 13) et entraînée dans la direction de transport du produit plan;

b) les noyaux (2, 8, 9; 13) des barres (1) ayant une section transversale indéformable mais pouvant être déformés élastiquement dans le sens longitudinal sont cintrés de plus en plus fortement par l'application de moments de flexion à leurs extrémités latérales (12), dans la direction de transport du produit plan, les dernières barres (1) présentant à leurs surfaces un cintrage correspondant à la forme du produit plan cintré; et

c) un montage pivotant (3 à 7) introduit les moments de flexion dans les noyaux (2, 8, 9; 13) des barres (1).

2. Dispositif selon la revendication 1, caractérisé en ce que le système de support comporte des appuis (4) sous forme de rouleaux à la manière d'une presse à cintrer les tubes (3 à 7) pour la déformation élastique des barres (1).

3. Dispositif selon la revendication 2, dans lequel le système de support somprend deux rouleaux (4) montés sur une selle d'appui (3) pivotante et disposés à distance l'un de l'autre dans le sens longitudinal des barres (1), les extrémités (1a) desdites barres étant placées entre lesdits rouleaux (4).

4. Dispositif selon la revendication 3, dans lequel les rouleaux (4) présentent des gorges pour la réception des extrémités (1a) des barres (1).

5. Dispositif selon l'une des revendications 3 ou 4, dans lequel chaque selle d'appui (3) est montée sur un profil de support (5) qui peut être déplacé par rotation autour de son point de fixation (6).

6. Dispositif selon l'une des revendications 3 à 5, dans lequel les selles d'appui (3) pour plusieurs barres (1) sont montées sur des profils de support (5) communs qui peuvent être déplacés ensemble, par groupes, par rotation autour de leurs points de fixation (6).

7. Dispositif selon l'une des revendications 5 ou 6, comprenant sur deux profils de support (5) conjugués des douilles filetées (17) dans les alésages filetés desquelles se trouve une broche filetée (18) pour le mouvement de pivotement des profils de support (5).

8. Dispositif selon l'une des revendications 5 à 7, comprenant entre les profils de support (5) et les selles d'appui (3) des broches filetées (15) montées dans des douilles filetées (14, 16) associées et réalisant le pivotement des différentes selles d'appui (3).

9. Dispositif selon l'une des revendications 1 à 8, dans lequel le noyau comprend une barre ronde (2), en particulier en acier à ressorts.

10. Dispositif selon la revendication 9, dans lequel la barre ronde (2) est entourée d'un insert (9) de forme hélicoïdale sur lequel est monté un tube flexible (8) en matière plastique.

11. Dispositif selon l'une des revendications 1 à 8, dans lequel le noyau est constitué par une barre creuse (13).

12. Dispositif selon la revendication 11, dans lequel la barre creuse (13) est réalisée à partir d'une matière plastique, en particulier d'une matière plastique renforcée à la fibre de verre.

13. Dispositif selon l'une des revendications 9 à 12, dans lequel le noyau (2, 8, 9; 13) est entouré d'une barre creuse flexible (11).

14. Dispositif selon la revendication 13, dans lequel la barre creuse flexible est constituée par un tuyau onduleux flexible (11).

15. Dispositif selon l'une des revendications 13 ou 14, dans lequel des bagues de support (10) sont disposées entre la barre creuse flexible (11) et le noyau (2, 8, 9; 13).

Fig. 1

Fig. 2

Fig. 3